# EUROPÄISCHE PATENTSCHRIFT

(11) **EP 4 188 686 B1**
(45) Veröffentlichungstag und Bekanntmachung des Hinweises auf die Patenterteilung: **31.01.2024**
(21) Anmeldenummer: 21726601.4
(22) Anmeldetag: 11.05.2021
(51) Int. Cl.: B30B 1/26, F16F 15/00, B30B 15/14, B30B 15/00, F16F 15/08

(54) **VERFAHREN ZUM BETREIBEN EINER ELASTISCH GELAGERTEN UMFORMMASCHINE, INSBESONDERE EINER PRESSE**
METHOD FOR OPERATING AN ELASTICALLY MOUNTED FORMING MACHINE, IN PARTICULAR A PRESS
PROCÉDÉ POUR FAIRE FONCTIONNER UNE MACHINE DE FORMAGE MONTÉE ÉLASTIQUEMENT, EN PARTICULIER UNE PRESSE

(30) Priorität: 29.07.2020 DE 102020120012
(43) Veröffentlichungstag der Anmeldung: 07.06.2023
(73) Patentinhaber: Lisega SE, 27404 Zeven (DE)
(72) Erfinder: SCHMIDT, Gunnar, 27404 Elsdorf/Frankenbostel (DE)
(74) Vertreter: Lippert Stachow Patentanwälte Rechtsanwälte
(86) Internationale Anmeldenummer: PCT/EP2021/062445
(87) Internationale Veröffentlichungsnummer: WO 2022/022871

(56) Entgegenhaltungen:
- JP-A- S5 646 137
- JP-A- H09 150 299
- JP-A- 2008 290 126
- US-A- 6 123 312

## Beschreibung

Die Erfindung betrifft ein Verfahren zum Betreiben einer elastisch gelagerten, weg- oder kraftgebundenen Umformmaschine mit den Merkmalen des Oberbegriffs des Anspruchs 1.

Der Betrieb bzw. die Steuerung einer solchen elastisch gelagerten weg- oder kraftgebundenen Umformmaschine ist auf dem Gebiet wohlbekannt. Solche Maschinen können je nach Ausführungsform zum Druckumformen, Zugdruckumformen, Zugumformen, Biegeumformen oder Schubumformen ausgebildet sein. Bei weggebundenen Umformmaschinen, beispielsweise weggebundenen Pressen, ist der Weg der Stößeleinrichtung (Bär) durch die Kinematik des Antriebes der Maschine festgelegt. Der Antrieb erfolgt in der Regel über einen Elektromotor, welcher ein Schwungrad antreibt, das mit der Stößeleinrichtung durch Einkuppeln zur Einleitung des Arbeitshubes verbindbar ist. Kraftgebundene Umformmaschinen weisen einen steuerbaren Antrieb, insbesondere einen hydrostatischen Antrieb, z.B. in Form einer Pumpe, oder einen Servomotorantrieb auf, durch den eine mit diesem permanent in Wirkverbindung stehenden Stößeleinrichtung nach dem jeweiligen Ansteuern des Antriebs zur Einleitung des Arbeitshubs die Stößeleinrichtung zur Durchführung des Umformprozesses bewegt wird. Der Zeitpunkt des Einleitens und das Durchführen des Arbeitshubes bei Bediener-gesteuerten Maschinen erfolgt in der Regel mittels einer sogenannten Zweihand-Einrückung.

Sowohl weggebundenen Umformmaschinen als auch kraftgebundenen Umformmaschinen ist gemein, dass diese bei der Durchführung des Umformprozesses auftretenden Trägheitskräften und/oder Trägheitsmomenten ausgesetzt sind. Diese können beispielsweise bei dauerhaft rotierenden Antriebswellen durch Ein- und Auskuppeln der Stößeleinrichtung oder durch eine Unwucht im Antrieb einer kraftgebundenen Umformmaschine verursacht werden und zu einer Taumel- und/oder Kippbewegung der Umformmaschine führen. Solche Bewegungen können zu einer erhöhten mechanischen Belastung der Maschine und unter Umständen zu einer Nichteinhaltung von Maßtoleranzen an dem umgeformten Werkstück führen. Die erzeugten Trägheitskräfte bzw. Trägheitsmomente verursachen aufgrund einer elastischen Lagerung der Umformmaschine an einem Abstützfundament, beispielsweise einem Baugrund, eine Anregung der durch die Umformmaschine und die elastische Lagerung festgelegte Starrkörpermoden dieses Schwingungssystems, was zu der beschriebenen Taumel- und/oder Kippbewegung der Maschine relativ zum Fundament führt, an welchem die Umformmaschine über eine elastische Lagerung abgestützt ist.

Auf dem Gebiet bekannt sind aktive Maßnahmen zur Beeinflussung der unerwünschten Gesamtkörperbewegungen einer solchen Umformmaschine, insbesondere die Tilgung von Schwingungsphänomenen durch Anbringen eines entsprechend abgestimmten zusätzlichen und auf dem Gebiet als Tilger bezeichneten Schwingungssystems auf die zu beruhigende Masse. Beispielsweise betrifft die Offenlegungsschrift DE 10 2008 046 763 A1 eine gattungsbildende Schnellläuferpresse mit Trägheitsmomentausgleich, bei welcher ein Ausgleichsgewicht vorgesehen ist, das dazu dient, Blindleistung des Stößels zu übernehmen, wobei die Phase der Bewegung des Ausgleichsgewichts auf die Phase der Bewegung des Stößels abgestimmt ist. Die Offenlegungsschrift DE 2806584 betrifft eine auch gattungsbildende Exzenterpresse, an welcher zum Massenausgleich eine Ausgleichsvorrichtung mit bewegbarem Masseteil angeordnet ist, die Antriebselemente zum winkeltreuen, gegenphasigen Antrieb des Masseteils gegenüber der Exzenterwelle aufweist.

Das Vorsehen derartiger Ausgleichsvorrichtungen für die jeweilige Umformmaschine ist mit einem erhöhten vorrichtungsseitigen Aufwand verbunden.

Die JP 2008 290 126 A offenbart ein Verfahren zum Betreiben einer Umformmaschine. Diese Presse ist über ein Feder-Dämpfer-System auf einem Fundament gelagert. Der Weg des Hauptrahmens wird über einen Verschiebungssensor erfasst. Außerdem ist ein Geschwindigkeitssensor zur Erfassung der ersten zeitlichen Ableitung vorgesehen. Die Winkelgeschwindigkeit und Winkellage eines Kurbelantriebs sind die Stellgrößen, auf die Einfluss genommen wird, um die Schwingungen an der Presse zu reduzieren.

Der vorliegenden Erfindung liegt die Aufgabe zugrunde, bei einer herkömmlichen, elastisch gelagerten Umformmaschine zumindest eine Abschwächung der beschriebenen Starrkörperbewegung der Umformmaschine im Betrieb bereitzustellen, ohne dass ein stark erhöhter apparativer Aufwand wie nach dem Stand der Technik gelehrt, vorgesehen werden muss.

Diese Aufgabe wird verfahrensseitig durch ein Verfahren zur Steuerung einer elastisch gelagerten Umformmaschine mit den Merkmalen von Anspruch 1 und eine Umformeinrichtung mit den Merkmalen des Anspruchs 11 gelöst.

Bei dem erfindungsgemäßen Verfahren wird mittels eines Antriebs ein Arbeitshub einer mit dem Antrieb in Wirkverbindung stehenden Stößeleinrichtung durchgeführt, bei dem durch eine Bewegung der Stößeleinrichtung während des jeweiligen Arbeitshubes, insbesondere im Zusammenwirken eines an der Stößeleinrichtung angeordneten Oberwerkzeuges mit einem an einem Werkzeugtisch angeordneten Unterwerkzeug, ein vorgegebener Umformprozess an einem Werkstück durchgeführt, wobei die durch das Einleiten des Arbeitshubes und/oder die durch eine Unwucht im Antrieb im Betrieb auftretenden Trägheitskräfte und/oder Trägheitsmomente zumindest teilweise kompensiert werden. Das erfindungsgemäße Verfahren ist dadurch ausgezeichnet, dass zumindest eine Kinematikgröße einer Starrkörperbewegung der elastisch gelagerten Umformmaschine zu deren Betrieb erfasst, insbesondere kontinuierlich erfasst wird, wobei der Zeitpunkt des Einleitens des Arbeitshubes an eine Momentanphasenlage der zumindest einen Kinematikgröße, insbesondere Weg s(t), Geschwindigkeit v(t) und/oder Beschleunigung a(t) der Starrkörperbewegung so zum Erzeugen von Trägheitskräften und/oder Trägheitsmomenten angepasst wird, dass der Starrkörperbewegung der Umformmaschine entgegen gewirkt wird.

Das erfindungsgemäße Verfahren resultiert in einer Verminderung der Amplitude einer Taumel- bzw. Kippbewegung der Umformmaschine. Eine solche Taumel- bzw. Kippbewegung der Umformmaschine stellt im Wesentlichen eine durch die auftretenden Trägheitskräften und/oder Trägheitsmomenten angeregte Starrkörperbewegung der Umformmaschine in einem schwingungsfähigen System dar, gebildet durch die Umformmaschine selbst sowie eine elastische Lagereinrichtung, mit welcher die Umformmaschine an einem Abstützfundament elastisch gelagert ist. Erfindungsgemäß kann diese Schwingungsverminderung bereitgestellt werden, ohne dass wie bei den herkömmlichen Verfahren ein stark erhöhter vorrichtungsseitiger Aufwand notwendig ist.

Stattdessen erfolgt bei dem erfindungsgemäßen Verfahren die Steuerung der Einleitung des Arbeitshubes abhängig von einer aktuellen Starrkörperbewegung der Umformmaschine in dem Schwingungssystem, sodass durch eine phasengenaue Einleitung des Arbeitshubes die Trägheitskräfte und/oder Trägheitsmomente in das schwingungsfähige System der Starrkörperbewegung der Umformmaschine, verursacht durch das Einkuppeln der Stößeleinrichtung und/oder durch eine Unwucht im Antrieb, so eingeleitet werden, dass sie der aktuellen Starrkörperbewegung der Umformmaschine entgegenwirken. Die Anregung der Starrköperbewegung kann durch die auftretenden Trägheitskräfte und/oder Trägheitsmomente z.B. stoßartig mit vorgegebener Amplitude und Zeitdauer erfolgen.

Bei Bediener-gesteuerten Maschinen kann insofern vorgesehen sein, dass nach erfolgter Zweihand-Einrückung durch den Bediener, das angegebene erfindungsgemäße Verfahren zum Steuern des Betriebs der Umformmaschine durchgeführt wird, d.h. nach der Zweihandeinrückung zumindest eine Kinematikgröße der Starrkörperbewegung der elastisch gelagerten Umformmaschine bei deren Betrieb erfasst wird und der Zeitpunkt des Einleitens des Arbeitshubes an eine Momentanphasenlage der zumindest einen Kinematikgröße der Starrkörperbewegung so angepasst wird zum derartigen Erzeugen von Trägheitskräften und/oder Trägheitsmomenten, dass der Starrkörperbewegung der Umformmaschine entgegen gewirkt wird. Erfindungsgemäß kann jedoch bei Bediener-gesteuerten Maschinen auch vorgesehen sein, dass das erfindungsgemäße Verfahren zum Steuern des Betriebs der Umformmaschine nach einem Betriebsstart der Umformmaschine permanent durchgeführt wird bzw. abläuft, bei dem zumindest eine Kinematikgröße der Starrkörperbewegung der elastisch gelagerten Umformmaschine erfasst wird und der Zeitpunkt des Einleitens des Arbeitshubes an eine Momentanphasenlage der zumindest einen Kinematikgröße der Starrkörperbewegung so angepasst wird zum derartigen Erzeugen von Trägheitskräften und/oder Trägheitsmomenten, dass der Starrkörperbewegung der Umformmaschine entgegen gewirkt wird und wobei der Arbeitshub nur eingeleitet wird, wenn eine Zweihand-Einrückung durch den Bediener für den einzuleitenden Arbeitshub durchgeführt wurde. Dabei kann eine Steuereinrichtung der Umformmaschine, die eingerichtet und ausgebildet ist zur Steuerung des erfindungsgemäßen Betriebs der Umformmaschine, eine durch den Benutzer mittels ZweihandEinrückung ausgelöste Signalisierung, insbesondere in Form eines elektrischen Signals erfassen und zur Umsetzung des erfindungsgemäßen Verfahrens verarbeiten.

Das erfindungsgemäße Verfahren resultiert somit zu einer deutlich reduzierten Auslenkung der Umformmaschine gegenüber einer ungesteuerten Betriebsweise. Das erfindungsgemäße Verfahren zum Betrieb der elastisch gelagerten Umformmaschine ermöglicht das schnellere Erreichen eines Zustandes der Umformmaschine mit geringerer Bewegungselongation bzw. -amplitude. Hierdurch kann unter Umständen ein nachfolgender Arbeitshub früher gestartet werden mit dem Vorteil einer schnelleren Taktfolge im Betrieb, was insbesondere bei einer automatischen Bestückung der Umformmaschine, bei welcher das jeweilige Werkstück genau zu positionieren ist, von Vorteil sein kann. Darüber hinaus kann sich aufgrund der geringeren Belastung der elastischen Lagerungen der Umformmaschine die Lebensdauer vorliegender Lager erhöhen bzw. erlaubt den Einsatz von Lagern mit geringeren Baugrößen.

Es sei bemerkt, dass die zumindest eine Kinematikgröße einer Starrkörperbewegung der elastisch gelagerten Umformmaschine beispielsweise eine Weg- oder Winkelauslenkung aus einer jeweiligen Ruhelage, eine zeitliche Ableitung dieser Größen bzw. die entsprechenden Resultate einer vorher oder gleichzeitig mit dem Betrieb der Umformmaschine durchgeführten numerischen Simulation der Starrkörperbewegung der Umformmaschine sein kann, zur Ermittlung einer jeweiligen Geschwindigkeit und/oder Beschleunigung. Zweckmäßige Kinematikgrößen können insbesondere mit Bezug auf die Eigenmoden des Systems zur Beschreibung der Bewegung der elastisch gelagerten Umformmaschine festgelegt werden. Das erfindungsgemäße Verfahren kann grundsätzlich auf alle Freiheitsgrade der Starrkörperbewegung der Umformmaschine angewandt werden.

Insofern liegt im Rahmen der Erfindung, dass die Erfassung der zumindest einen Kinematikgröße der Starrkörperbewegung beispielsweise mittels einer Messung mit einem Bewegungssensor und/oder mittels einer Berechnung, insbesondere im Rahmen einer Simulation der Starrkörperbewegung der Umformmaschine durchgeführt wird.

Weitere vorteilhafte Merkmale und Weiterbildungen der Erfindung sind in der nachfolgenden allgemeinen Beschreibung, den Figuren, der Figurenbeschreibung sowie den Unteransprüchen angegeben.

Zweckmäßigerweise kann vorgesehen sein, dass der Betrieb der Umformmaschine durch eine Maschinensteuerung gesteuert wird, welche, u.U. nach Vorliegen eines durch einen Bediener ausgelösten Zweihand-Einrückungssignals, zum Zeitpunkt des Einleitens des Arbeitshubes den Antrieb zur Durchführung des Umformungsprozesses ansteuert und/oder eine zwischen dem Antrieb und der Stößeleinrichtung angeordnete Kupplungseinrichtung zum Herstellen einer Wirkverbindung zwischen Antrieb und Stößeleinrichtung zur Durchführung des Umformungsprozesses ansteuert. Im ersten Fall kann es sich bei der Umformmaschine um eine kraftgebundene Umformmaschine handeln, bei welcher der Antrieb permanent mit der Stößeleinrichtung verbunden ist und im zweiten Fall um eine weggebundene Umformmaschine, bei welcher eine Wirkverbindung zwischen Antrieb und der Stößeleinrichtung durch Einkuppeln einer steuerbaren Kupplung herstellbar und durch Auskuppeln lösbar ist.

Wie erläutert, kann die elastisch gelagerte Umformmaschine eine durch die auftretenden Trägheitskräfte und/oder Trägheitsmomente angeregte Starrkörperbewegung ausführen. Es hat sich insbesondere beim Betrieb von weggebundenen Umformmaschinen herausgestellt, bei welchen die Anregung, insbesondere eine Anregung der Starrkörperbewegung im Wesentlichen beim Einleiten des Arbeitshubes bzw. beim Einkuppeln erfolgt, dass zweckmäßigerweise zur Einstellung eines optimalen Zeitpunkts zum Einleiten des Arbeitshubes bzw. zum Einkuppeln der Stößeleinrichtung ein Zeitbereich ausgewählt werden kann, innerhalb welchem ein globales Maximum der ersten zeitlichen Ableitung des Verlaufs einer Auslenkung der Umformmaschine liegt.

Vorzugsweise liegt der Einkuppelzeitpunkt unmittelbar vor dem Erreichen dieses globalen Maximums. In Bezug auf eine harmonische Schwingung kann unmittelbar vor je nach Ausführungsform heißen <30°, <20°, insbesondere <10° vor Erreichen dieses globalen Maximums in der ersten zeitlichen Ableitung des Verlaufs der Auslenkung der Umformmaschine. Es kann auch vorgesehen sein, dass der Anregungszeitpunkt genau koinzident mit dem Erreichen dieses globalen Maximums in der ersten zeitlichen Ableitung des Verlaufs der Auslenkung der Umformmaschine ist. Grundsätzlich kann der Zeitpunkt des Einkuppelns der Stößeleinrichtung bzw. des Einleitens des Arbeitshubes so gewählt werden, dass eine Bewegung der Umformmaschine in eine Richtung verursacht wird, welche in entgegengesetzter Richtung zur momentanen Auslenkung der Umformmaschine liegt, d.h. die Anregung sollte gegenphasig erfolgen.

Es hat sich insbesondere beim Betrieb von kraftgebundenen Umformmaschinen herausgestellt, bei welchen die Anregung der Starrkörperbewegung im Wesentlichen durch eine Unwucht des Antriebes während des Arbeitshubes und/oder des Rückhubes der Stößeleinrichtung erfolgt, dass zweckmäßigerweise ein Zeitpunkt zum Einleiten des Arbeitshubes so ausgewählt werden kann, dass die Anregung der Starrkörperbewegung der Umformmaschine, die insbesondere während des Arbeitshubes und/oder des Rückhubes stoßartig erfolgen kann, durch die auftretenden Trägheitskräfte und/oder Trägheitsmomente innerhalb eines Zeitraums erfolgt, in welchem ein globales Maximum der ersten zeitlichen Ableitung des Verlaufs einer Auslenkung der Umformmaschine liegt. Vorzugsweise kann der Einleitungszeitpunkt des Arbeitshubes so erfolgen, dass der Anregungszeitpunkt der Starrkörperbewegung unmittelbar vor dem Erreichen dieses globalen Maximums liegt. In Bezug auf eine harmonische Schwingung der Starrkörperbewegung, die in Fällen einer Starrkörperbewegung näherungsweise angenommen werden kann, kann "unmittelbar vor" je nach Ausführungsform heißen <30°, <20°, insbesondere <10° vor Erreichen dieses globalen Maximums in der ersten zeitlichen Ableitung des Verlaufs der Auslenkung der Umformmaschine. Es kann auch vorgesehen sein, dass der Anregungszeitpunkt genau koinzident mit dem Erreichen dieses globalen Maximums in der ersten zeitlichen Ableitung des Verlaufs der Auslenkung der Umformmaschine ist. Grundsätzlich kann der Zeitpunkt der Anregung der Starrkörperbewegung so ausgewählt sein, dass eine Bewegung der Umformmaschine in eine Richtung erzeugt wird, welche in entgegengesetzter Richtung zur momentanen Auslenkung der Umformmaschine liegt, d.h. die Anregung sollte gegenphasig erfolgen.

Zur Bereitstellung der notwendigen Informationen für die Steuerung des Zeitpunkts des Einkuppelns der Stößeleinrichtung bzw. der Einleitung des Arbeitshubes wird die zumindest eine Kinematikgröße der Starrkörperbewegung der Umformmaschine relativ zum Abstützfundament durch zumindest einen Bewegungsaufnehmer erfasst. Dieser Bewegungsaufnehmer kann beispielsweise als Auslenkungsaufnehmer wie Wegaufnehmer, Geschwindigkeitsaufnehmer oder Beschleunigungsaufnehmer ausgebildet sein. Je nach Ausführungsform kann der Bewegungsaufnehmer insbesondere an der Umformmaschine selbst bzw. an der Lagereinrichtung angeordnet sein. Der Bewegungsaufnehmer, insbesondere Beschleunigungsaufnehmer, kann die Größe einer elastischen Verformung an der Lagereinrichtung, beispielsweise einer elastischen Verformung eines Elastomers erfassen, woraus die zumindest eine Kinematikgröße der Starrkörperbewegung der Umformmaschine ermittelt, insbesondere berechnet, werden kann zum optimalen zeitlichen Einkuppeln der Stößeleinrichtung bzw. Einleiten des Arbeitshubes.

Als Bewegungsaufnehmer zur Umsetzung des erfindungsgemäßen Verfahrens sind grundsätzlich eine Vielzahl von Sensoren möglich, welche insbesondere eine Auslenkung, eine Geschwindigkeit und/oder eine Beschleunigung der Starrkörperbewegung der Umformmaschine erfassen. Beispielsweise kann der Bewegungsaufnehmer als Tauchspulenaufnehmer oder als Widerstandsaufnehmer ausgebildet sein. Es ist auch möglich, den Bewegungsaufnehmer als optischen Sensor auszubilden.

Zur Bereitstellung eines entsprechenden Signals an eine der Umformmaschine zugeordnete Steuereinrichtung wird ein jeweiliges Ausgangssignal des zumindest einen Bewegungsaufnehmers als Eingangssignal einer Maschinensteuerung der Umformmaschine zugeführt, wobei diese Zuführung auch drahtlos erfolgen kann. Vorzugsweise können mehrere Bewegungsaufnehmer vorgesehen sein, welche eine oder mehrere Kinematikgrößen der Starrkörperbewegung der Umformmaschine erfassen, insbesondere messen und beispielsweise einer zentralen Steuereinrichtung wie einer Maschinensteuerung der Umformmaschine zur Durchführung des erfindungsgemäßen Verfahrens zur Verfügung zu stellen.

Um insbesondere in solchen Ausführungsformen, bei welchen die Umformmaschine eine komplexe Starrkörperbewegung ausführt, kann zweckmäßigerweise vorgesehen sein, dass die zumindest eine Kinematikgröße der Starrkörperbewegung der Umformmaschine relativ zum Abstützfundament auf der Grundlage eines Starrkörper-Simulationsmodells berechnet wird und der Zeitpunkt des Einkuppelns bzw. des Einleitens des Arbeitshubes in Abhängigkeit eines gemessenen und des berechneten Momentanwertes der zumindest einen Kinematikgröße festgelegt wird. Beispielsweise kann der Zeitpunkt des Einkuppelns bzw. des Einleitens des Arbeitshubes grundsätzlich nach der berechneten Kinematikgröße eingestellt werden, wobei der gemessene Momentanwert als Kontrollgröße herangezogen wird, wobei beim Vorliegen eines vorgegebenen Unterschiedswertes die Steuerung aus Sicherheitsgründen abgebrochen und der Betrieb beendet wird. Es ist jedoch auch möglich, dass der Zeitpunkt des Einkuppelns bzw. des Einleitens des Arbeitshubes nach der gemessenen Kinematikgröße eingestellt wird, wobei der berechnete Momentanwert als Kontrollgröße herangezogen wird, wobei beim Vorliegen eines vorgegebenen Unterschiedswertes die Steuerung aus Sicherheitsgründen abgebrochen und der Betrieb beendet wird.

Es kann vorgesehen sein, dass die zumindest eine Kinematikgröße der Starrkörperbewegung der Umformmaschine relativ zum Abstützfundament auf der Grundlage eines Starrkörper-Simulationsmodells der elastisch gelagerten Umformmaschine berechnet wird und der Zeitpunkt des Einleitens des Arbeitshubes bzw. des Einkuppelns der Stößeleinrichtung in Abhängigkeit eines mittels der Simulation berechneten Momentanwertes der zumindest einen Kinematikgröße festgelegt wird. Zur Kopplung der Simulation mit dem realen Betrieb der Umformmaschine kann vorzugsweise vorgesehen sein, dass eine Kinematikgröße der Starrkörperbewegung der elastisch gelagerten Umformmaschine relativ zum Abstützfundament gemessen und in Abhängigkeit des Messignals und/oder eines Betriebssignals aus einer Maschinenüberwachungseinrichtung ein Synchronisationssignal abgeleitet wird, mit welchem der zeitliche Verlauf der mittels des Simulationsmodells berechneten Kinematikgröße mit der realen Starrkörperbewegung der Umformmaschine synchronisiert wird.

Es kann auch vorgesehen sein, Ausgangssignale einer bei herkömmlichen Umformmaschinen vorgesehene Maschinenüberwachungseinrichtung, welche insbesondere zur Messung einer oder mehrerer Kinematikgrößen der Starrkörperbewegung der Umformmaschine oder anderer Betriebsparameter eingerichtet sein kann, zusammen mit Ergebnissen einer Simulation der Starrkörperbewegung der Umformmaschine zu nutzen, um den Zeitpunkt des Einkuppelns der Stößeleinrichtung bzw. des Einleitens des Arbeitshubes wie beschrieben derart festzulegen, dass die eingeleiteten Trägheitskräfte und/oder Trägheitsmomente in das schwingungsfähige System der momentanen Starrkörperbewegung der Umformmaschine entgegenwirken. Damit kann das erfindungsgemäße Verfahren zur Steuerung einer elastisch gelagerten Umformmaschine ohne zusätzlichen vorrichtungsseitigen Aufwand im Vergleich zu einem herkömmlichen Verfahren zur Steuerung einer herkömmlichen Umformmaschine durchgeführt werden.

Je nach spezifischer Umformmaschine und deren Betrieb kann diese bei der Ausführung eines Arbeitshubes in Bezug auf bestimmte Abschnitte oder Bauteile der Maschine auch elastischen Verformungen ausgesetzt sein. Um bei der erfindungsgemäßen Steuerung des Betriebes der Umformmaschine auch derartige elastische Verformungsbewegungen zumindest teilweise zu verringern, kann vorgesehen sein, eine Größe einer elastischen Verformung eines vorgegebenen Abschnittes oder Bauteils der Umformmaschine wie eine Auslenkung relativ zum Gehäuse oder einem Maschinenfundament der Umformmaschine zu erfassen, wobei der Zeitpunkt des Einkuppelns der Stößeleinrichtung bzw. des Einleitens des Arbeitshubes an eine Momentanphasenlage der einen Größe der Verformungsbewegung des vorgegebenen Abschnittes bzw. Bauteils der Umformmaschine angepasst wird zum derartigen Erzeugen von Trägheitskräften und/oder Trägheitsmomenten beim Einkuppeln bzw. Einleiten des Arbeitshubes, das der elastischen Verformungsbewegung des vorgegebenen Abschnittes bzw. des Bauteils der Umformmaschinen entgegengewirkt wird. Ein solcher Abschnitt bzw. ein solches Bauteil kann beispielsweise ein Dämpfungselement wie

ein Elastomerkörper oder ein Stoßdämpfer oder auch ein unter der auftretenden Belastung resultierender elastischer Biegelinienabschnitt innerhalb der Umformmaschine umfassen, der somit in der Umformmaschine angeordnet ist und sich insofern von der Lagereinrichtung, über welche die Umformmaschine elastisch am Abstützfundament abstützt ist, unterscheidet.

Es kann vorgesehen sein, sowohl die Starrkörperbewegung der Umformmaschine wie beschrieben durch phasengenaues Einkuppeln der Stößeleinrichtung bzw. Einleiten des Arbeitshubes zu vermindern und in ähnlicher Weise eine elastische Verformungsbewegung innerhalb der Umformmaschine zu reduzieren, wobei die Bewegungsverminderung je nach Priorisierung auf die Starrkörperbewegung der Umformmaschine oder die elastische Verformungsbewegung eines Abschnitts bzw. Bauteils der Umformmaschine gelegt oder ein Kompromiss eingestellt wird, um beide Bewegungen bzw. Auslenkungen etwa in gleichem Maße zu reduzieren. Im gleichen Maß kann dabei meinen, dass die jeweilige Auslenkungsamplituden der Starrkörperbewegung der Umformmaschine und die elastische Verformung innerhalb der Maschine prozentual im Wesentlichen gleich vermindert werden.

Das erfindungsgemäße Verfahren zum Betrieb bzw. zum Steuern des Betriebs einer Umformmaschine führt zu einer Reduzierung einer Starrkörperbewegung der Umformmaschine bzw. einer elastischen Verformung eines Abschnitts bzw. Bauteils der Umformmaschine und kann insbesondere genutzt werden, um eine im Vergleich zu einem herkömmlichen Verfahren höheren Arbeitstaktrate im Betrieb einer Umformmaschine einzustellen, sodass eine höhere Produktionsrate der Umformprodukte bei der Umsetzung des erfindungsgemäßen Verfahrens erzielt werden kann. Es kann vorgesehen sein, dass im Betrieb ein aktueller Amplitudenwert, der mittels eines Bewegungsaufnehmers bzw. Sensors gemessen oder mittels einer Simulation berechnet wurde, einer der zumindest einen Kinematikgröße der Starrkörperbewegung der Umformmaschine, beispielsweise einer Auslenkung in eine vorgegebene Richtung, mit einem vorgegebenen Amplitudenschwellwert verglichen wird und die Taktrate der Umformmaschine erhöht wird, wenn der aktuelle Amplitudenwert geringer ist als der vorgegebene Schwellwert. Das erfindungsgemäße Verfahren für den Betrieb einer Umformmaschine kann auch eine Regelung einer derartigen Auslenkungsamplitude umfassen, bei welcher als Führungsgröße beispielsweise der beschriebene Schwellwert der Auslenkungsamplitude herangezogen wird, und die Taktrate für den Arbeitshub der Umformmaschine eine Stellgröße der Regelung darstellen kann.

Die Erfindung betrifft ferner eine Umformmaschine, insbesondere eine Presse, die ausgebildet ist zur Durchführung eines Verfahrens nach einem der Ansprüche 1 bis 10. Beispielsweise kann eine solche erfindungsgemäße Umformeinrichtung eine weggebundene Umformeinrichtung sein, die je nach Ausführungsform ein Kurbelgetriebe oder ein Kurvengetriebe aufweisen kann. Insbesondere in der Bauart einer Presse kann der Antrieb einen Elektromotor umfassen, welcher ein Schwungrad antreibt, das die Energie mittels einer Kupplungseinrichtung an das Hauptgetriebe, wie beschrieben ein Kurbelgetriebe oder ein Kurvengetriebe abgibt. Beispielhafte Umformeinrichtungen sind Schubkurbelpressen, Exzenterpressen und Kniehebelpressen. Darüber hinaus kann die erfindungsgemäße Umformeinrichtung auch eine kraftgebundene Umformmaschine sein, wobei der Antrieb als Direktantrieb z.B. entweder durch einen elektrischen Servomotor, auch Torque-Motor genannt, bereitgestellt sein kann oder einen hydrostatischen Antrieb umfasst, bei welchem die im Druckmedium gespeicherte Energie mit Hilfe von Zylindern über einen Pumpenantrieb in mechanische Energie umgewandelt wird. In der Nomenklatur der vorliegenden Anmeldung wird sowohl bei der kraftgebundenen Umformmaschine als auch bei der weggebundenen Umformmaschine durch den Antrieb eine Stößeleinrichtung bewegt, welche ein Oberwerkzeug der Maschine trägt.

Die Erfindung wird im Folgenden durch das Beschreiben einer Ausführungsform nebst Abwandlungen unter Bezugnahme auf die beiliegenden Figuren erläutert, wobei
- Figur 1: in einer Frontalansicht eine erfindungsgemäße Umformmaschine in Gestalt einer Presse zur Durchführung des erfindungsgemäßen Verfahrens,
- Figur 2: in einer Symboldarstellung eine Kipp-/Taumelbewegung der Maschine der Figur 1 im Betrieb,
- Figur 3: in einem Ablaufdiagramm eine Ausführungsform des erfindungsgemäßen Verfahrens,
- Figur 4a: den zeitlichen Verlauf einer Auslenkung s(t) und deren zeitliche Ableitung v(t) der Umformmaschine bei deren Starrkörperbewegung im Betrieb bei der Durchführung des erfindungsgemäßen Verfahrens bei einer erfindungsgemäßen phasenoptimierten Einkupplung der Stößeleinrichtung, und
- Figur 4b: eine zur Figur 4a entsprechende Darstellung bei einer nichtphasenoptimierten Einkupplung der Stöβeleinrichtung
zeigt.

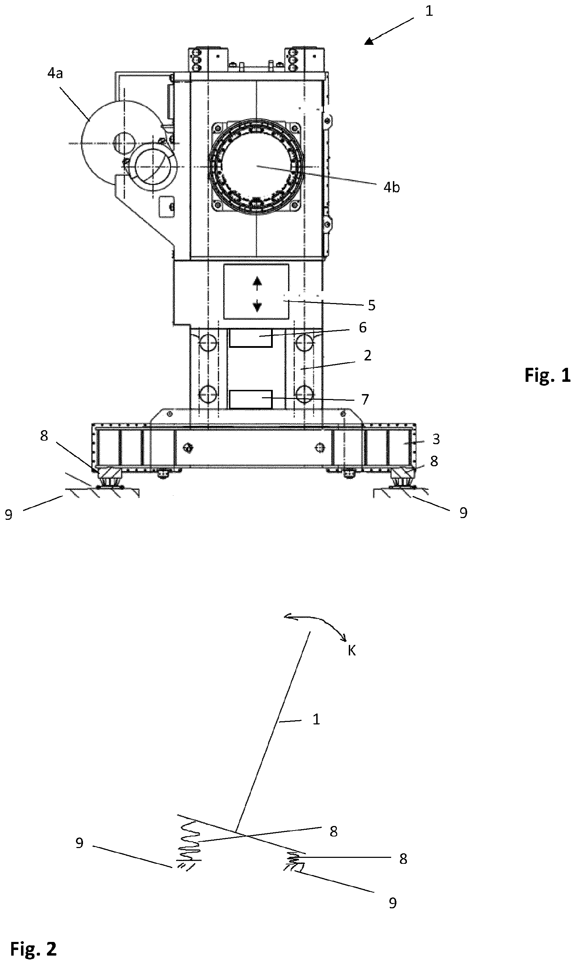

Figur 1 zeigt in einer Frontalansicht den Aufbau einer elastisch gelagerten Presse 1, die erfindungsgemäß gestaltet und ausgebildet ist, das erfindungsgemäße Verfahren zur Steuerung des Betriebes einer elastisch gelagerten Umformmaschine auszuführen. Diese umfasst einen Ständer 2, der sich an einem Maschinengestell 3 abstützt. Ein Antrieb, der hier einen Elektromotor 4a und eine vom Motor angetriebene Schwungmasse 4b umfasst, wirkt in der beschriebenen Ausführungsform über eine in der Figur verdeckte, steuerbare Kupplungseinrichtung mit einer Stößeleinrichtung 5 oder Bär zusammen, wobei über die steuerbare Kupplung zur Durchführung des Arbeitshubes eine Wirkverbindung zwischen Antrieb 4a, 4b und Bär 5 einstellbar und zur Vorbereitung des nächsten Arbeitshubes lösbar ist. Die Stößeleinrichtung trägt endseitig ein Oberwerkzeug 6, das zur Umsetzung eines Umformprozesses eines nicht dargestellten Werkstückes mit einem Unterwerkzeug 7 zusammenwirkt, das an dem Maschinengestell 3 angeordnet ist. Dieses trägt über die Ständer 2 den Antrieb und den Bär und ist selbst mittels mehreren elastischen Lagerelementen 8, die in der beschriebenen Ausführungsform jeweils einen Elastomerkörper umfassen, am Baugrund oder Abstützfundament 9 abgestützt. In einer anderen Ausführungsform, insbesondere einer weggebundenen Umformmaschine, kann auch vorgesehen sein, dass die Presse einen Antrieb mit einem Servomotor umfasst, der starr mit der Stößeleinrichtung 5 verbunden ist.

In allen Ausführungen solcher Umformmaschinen wird beim Einkuppeln zum Verbinden des Antriebs und der Stößeleinrichtung bzw. beim Einleiten des Arbeitshubes und/oder während der Durchführung des Arbeitshubes, beispielsweise aufgrund einer Unwucht im Antrieb, durch das jeweilige Auftreten von Trägheitskräften bzw. Trägheitsmomenten in der Regel eine Taumel- und/oder Kippbewegung der Presse 1 erzeugt.

Bei kraftgebundenen Umformmaschinen können diese, eine Starrkörperbewegung der Umformmaschine anregenden Trägheitskräfte bzw. Trägheitsmomente insbesondere durch eine Unwucht im Antrieb erzeugt werden und insofern über den gesamten Zeitbereich eines Arbeitshubes der Stößeleinrichtung der Umformmaschine auftreten. Bei weggebundenen Umformmaschinen können diese, eine Starrkörperbewegung der Umformmaschine anregenden Trägheitskräfte bzw. Trägheitsmomente insbesondere während des Einkuppelns der zwischen dem Antrieb und der Stößeleinrichtung angeordneten Kupplung bzw. beim Einleiten des Arbeitshubes auftreten. In solchen Fällen, bei welchen der Antrieb eine Unwucht aufweist, können zusätzliche Anregungsmomente bzw. Anregungskräfte auftreten.

Figur 2 zeigt in einer Symboldarstellung eine mögliche Kippbewegung K der Presse der Figur 1 in Form einer Schwingung. Grundsätzlich angeregt werden können mögliche Moden einer Starrkörperbewegung eines schwingungsfähigen Systems, das durch die über die elastischen Lagerelemente 8 am Baugrund 9 gelagerten Presse 1 gebildet ist.

Wie erläutert, ist die Presse der Figur 1 als weggebundene Umformmaschine ausgebildet, bei welcher die, eine Starrkörperbewegung der Umformmaschine anregenden Trägheitskräfte bzw. Trägheitsmomente während des Einkuppelns der Kupplung zum Einstellen einer Wirkverbindung zwischen dem Antrieb und der Stößeleinrichtung verursacht werden. Der Betrieb der Umformmaschine der Figur 1 wird in der beschriebenen Ausführungsform durch eine Maschinensteuerung gesteuert, welche zum Zeitpunkt des Einleitens des Arbeitshubes die zwischen dem Antrieb und der Stößeleinrichtung angeordnete Kupplungseinrichtung zum Herstellen einer Wirkverbindung zwischen Antrieb und Kupplung ansteuert.

Wesentlich für die Durchführung des erfindungsgemäßen Verfahrens bzw. den Betrieb der erfindungsgemäßen Umformmaschine ist, dass zumindest eine Kinematikgröße der Starrkörperbewegung, beispielsweise eine Auslenkung, der elastisch gelagerten Umformmaschine 1 bei dessen Betrieb erfasst, hier mittels entsprechender Sensoren in Form eines oder mehreren Bewegungsaufnehmer gemessen wird, wobei der Zeitpunkt des Einleitens des Arbeitshubes, hier der Zeitpunkt für das Bewirken der Wirkverbindung zwischen Antrieb und Stößeleinrichtung so eingestellt wird, dass die beim Einkuppeln erzeugten Trägheitskräfte und/oder Trägheitsmomente der Starrkörperbewegung der Umformmaschine entgegen wirken. In einer anderen Ausführungsform kann auch vorgesehen sein, die zumindest eine Kinematikgröße der Starrkörperbewegung, beispielsweise eine Auslenkung, durch Simulation der Starrkörperbewegung der Umformmaschine zu berechnen, wobei ein Ausgangssignal eines Bewegungssensor zur Erfassung der Bewegung der Umformmaschine oder ein anderes Betriebssignals zur Synchronisation der realen Bewegung der Umformmaschine mit der Simulation herangezogen werden kann.

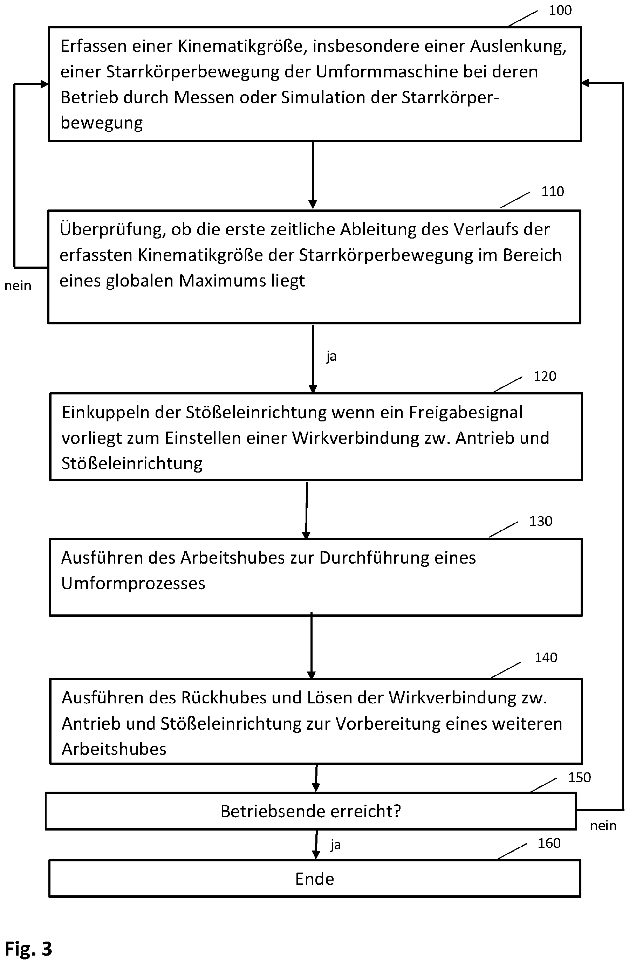

Das erfindungsgemäße Verfahren zum phasengenauen Einkuppeln der Kupplung der in Figur 1 angegebenen Presse ist in Figur 3 angegeben und wird in der beschriebenen Ausführungsform durch eine zentrale Maschinensteuerung der Umformmaschine durchgeführt. Dabei wird davon ausgegangen, dass die Umformmaschine sich im Wirkbetrieb befindet, bei welchem nach dem Vorliegen eines Freigabesignals, insbesondere eines durch einen Bediener veranlassten Zweihand-Einrückungssignales mit dem Einkuppeln ein Arbeitshub der Stößeleinrichtung eingeleitet wird, bei dem im Zusammenwirken der Stößeleinrichtung bzw. dem von dieser getragenen Oberwerkzeug mit einem an einem Werkzeugtisch angeordneten Unterwerkzeug ein vorgegebener Umformungsprozess an einem Werkstück durchgeführt wird, wobei die Stößeleinrichtung in einem nachfolgenden Rückhub zurückgeführt wird, und die Wirkverbindung zwischen Antrieb und Stößeleinrichtung durch Auskuppeln aufgehoben wird, bis nach dem Vorliegen eines weiteren Freigabesignals ein weiterer Arbeitshub durch Einkuppeln eingeleitet wird.

In der beschriebenen Ausführungsform wird das Einkuppeln an eine Phasenlage einer Kinematikgröße, hier einer Auslenkung der Umformmaschine aus einer Ruhelage angepasst. Ausgangspunkt der in Figur 3 angegebenen Verfahrensschritte ist eine Betriebssituation, bei welchem der Antrieb von der Stö-βeleinrichtung entkoppelt ist und nach dem Vorliegen eines Freigabesignals der Zeitpunkt des Einkuppelns festzulegen ist, wobei die Umformmaschine eine durch vorhergehende Anregungen verursachte Starrkörperbewegung ausführt, welche insbesondere aufgrund von Dämpfungseigenschaften der Lagerelemente je nach Ausführungsform unterschiedlich stark gedämpft ausgeführt wird. Es sei bemerkt, dass bei der Durchführung des erfindungsgemäßen Verfahrens mit einer vollautomatisch arbeitenden Umformmaschine die Prüfung des Vorliegens eines Freigabesignals entfallen kann.

In den Verfahrensschritten der Figur 3 wird in Schritt 100 die aktuelle Auslenkung der Starrkörperbewegung der Umformmaschine 1 durch einen Bewegungssensor gemessen, wobei die Maschinensteuerung eingerichtet ist, in Schritt 110 zu überprüfen, ob die erste zeitliche Ableitung des Verlaufs der Auslenkung, d.h. die Geschwindigkeit im Bereich eines globalen Maximums der Starrkörperbewegung liegt. Soweit dies nicht der Fall ist, erfolgt kein Einkuppeln der Stößeleinrichtung zum Einstellen einer Wirkverbindung zwischen Antrieb und Stößeleinrichtung, stattdessen erfolgt ein Rücksprung zu Schritt 100, d.h. zur Durchführung einer weiteren Messung der Auslenkung der Umformmaschine. Diese Mess- und Prüfschleife wird so lange durchlaufen, bis die Geschwindigkeit im Bereich des vor dem Start des in Figur 3 angegebenen Verlaufs ermittelten globalen Maximums der Geschwindigkeit liegt, sodass dann in Schritt 120 eine im Wesentlichen gegenphasige Einleitung des Arbeitshubes erfolgen kann mit phasenangepasster Einleitung der anregenden Trägheitskräften und/oder Trägheitsmomenten, wodurch der aktuellen Starrkörperbewegung der Umformmaschine entgegengewirkt wird. Mit dem Einleiten des Arbeitshubes in Schritt 120 erfolgt dessen Ausführung in Schritt 130 zur Durchführung eines vorgegebenen Umformprozesses, danach erfolgt in Schritt 140 der Rückhub der Stößeleinrichtung und das Lösen der Wirkverbindung zwischen Stößeleinrichtung und Antrieb zur Vorbereitung eines weiteren Arbeitshubes. Soweit ein Betriebsende erreicht ist, wird die Umformmaschine gestoppt, andernfalls erfolgt ein Sprung in den Start der Messschleife, d.h. zu Schritt 100.

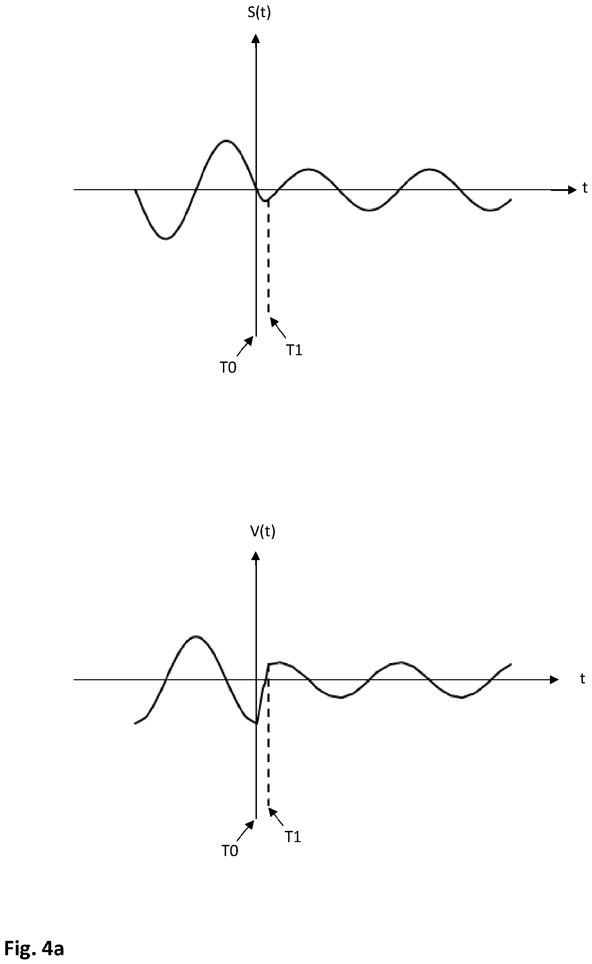

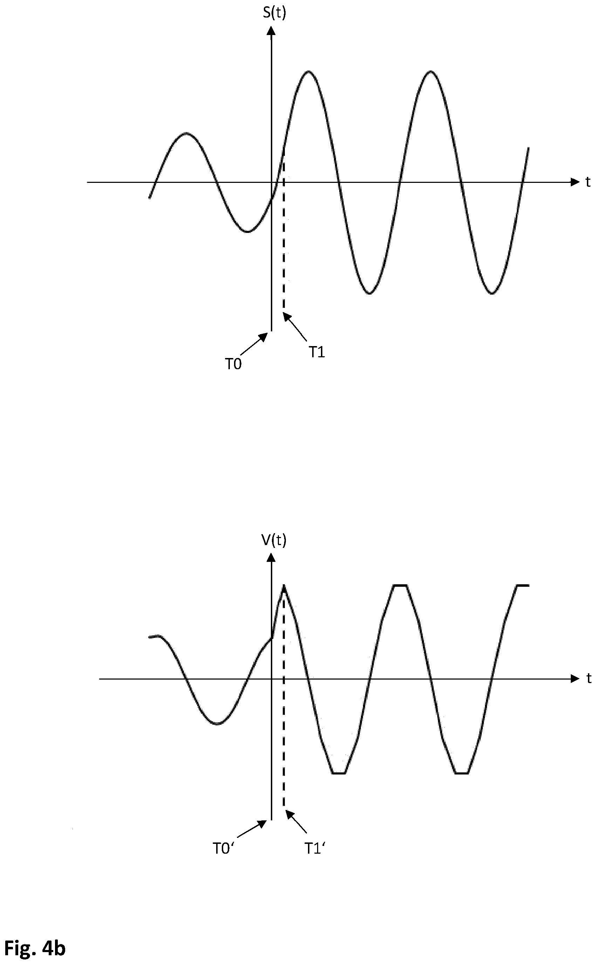

Beispielhafte Verläufe der Starrkörperbewegung der Umformmaschine der Figur 1 sind in den Figuren 4a, b angegeben. Dabei zeigt der jeweilige obere Graph den Verlauf einer Auslenkung der Umformmaschine im Betrieb und der untere Zeitverlauf die sich daraus ergebende Geschwindigkeit der Auslenkung. In beiden Figuren zeigen die Zeitverläufe vor dem Zeitpunkt T0 bzw. T0' die Starrkörperbewegung der Umformmaschine 1 mit gelöster Wirkverbindung zwischen Antrieb und Stößeleinrichtung mit dem Resultat einer schwach gedämpften Schwingung. Zum Zeitpunkt T0 bzw. T0' erfolgt über einen Zeitraum (T1 - T0) bzw. (T1' - T0') eine bauart- und anwendungsbezogene, hier etwa stoßartige Anregung durch das Herstellen der Wirkverbindung zwischen Antrieb und Stößeleinrichtung über das Einkuppeln der Kupplung, wodurch das Schwingungssystem, das durch die mittels elastischer Lagerelemente 8 am Abstützfundament 9 elastisch gelagerte Umformmaschine 1 gebildet ist, Anregungsenergie erhält.

Die Darstellungen der Figuren 4a, b zeigen die Zeitverläufe vor, während und nach der Einleitung der Trägheitskräfte bzw. Trägheitsmomente beim Einkuppeln der Stößeleinrichtung. Erkennbar erfolgt die äußere Anregung der Starrkörperbewegung bei den Verläufen der Figur 4a zu einem Zeitpunkt, bei welchem die Geschwindigkeit der Starrkörperbewegung etwa maximal ist. Darüber hinaus erfolgt die Anregung zur Erzeugung einer gegenphasigen Bewegung der Umformmaschine mit dem Resultat einer nachfolgenden Bewegung der Umformmaschine mit verminderter Amplitude. Demgegenüber zeigt Figur 4b das Resultat einer Anregung, die identisch mit der der Figur 4a ist, wobei jedoch der Zeitpunkt des Einkuppelns zwar wiederum nach Erreichen eines globalen Maximums der Geschwindigkeit liegt, jedoch die Anregung gleichphasig mit der aktuellen Auslenkung erfolgt, sodass nach Abklingen der Störung eine Starrkörperbewegung mit weit höherer Amplitude im Vergleich zu der Situation der Figur 4a resultiert.

Die Kurvenverläufe der Figuren 4a, b zeigen die Wirksamkeit des erfindungsgemäßen Verfahrens bzw. der erfindungsgemäß ausgebildeten Umformmaschine zur Reduzierung einer Starrkörperbewegung der elastisch gelagerten Umformmaschine bei deren Betrieb. Je nach Ausführungsform können innerhalb eines Betriebszyklus der Umformmaschine auch mehrere Anregungen zu unterschiedlichen Zeitpunkten auftreten, auch in solchen Fällen ist das erfindungsgemäße Verfahren grundsätzlich anwendbar zur Reduzierung einer Starrkörperbewegung der Umformmaschine mit den obenstehend beschriebenen Vorteilen.

### Bezugszeichenliste

- 1: Umformmaschine, Presse
- 2: Ständer
- 3: Maschinenfundament, Maschinengestell, -gehäuse
- 4a: Elektromotor
- 4b: Schwungmasse
- 5: Stößeleinrichtung, Bär
- 6: Oberwerkzeug
- 7: Unterwerkzeug
- 8: Elastisches Lagerelement, Lagereinrichtung
- 9: Baugrund, Abstützfundament
- K: Kippbewegung
- s: Auslenkung, Weg
- v: Geschwindigkeit
- T0, T0': Zeitpunkt des Einleitens eines Arbeitshubes bzw. Einstellen einer Wirkverbindung zwischen Antrieb und Stößeleinrichtung
- T1, T1': Lösen der Wirkverbindung

## Patentansprüche

1. Verfahren zum Betreiben einer elastisch gelagerten, weggebundenen oder kraftgebundenen Umformmaschine (1),
bei dem mittels eines Antriebs (4a, 4b) ein Arbeitshub einer mit dem Antrieb in Wirkverbindung stehenden Stößeleinrichtung (5) durchgeführt wird,
und durch eine Bewegung der Stößeleinrichtung während des jeweiligen Arbeitshubes, im Zusammenwirken eines an der Stö-βeleinrichtung angeordneten Oberwerkzeuges (6) mit einem an einem Werkzeugtisch angeordneten Unterwerkzeug (7), ein vorgegebener Umformprozess an einem Werkstück durchgeführt wird,
wobei zumindest eine Kinematikgröße (s(t),v(t),a(t)) einer Starrkörperbewegung der elastisch gelagerten Umformmaschine (1) Anspruch 5]relativ zum Abstützfundament bei deren Betrieb (T0) durch zumindest einen Beschleunigungsaufnehmer und/oder durch einen zwischen dem Maschinengehäuse (3) und dem Abstützfundament (9) angeordneten Bewegungsaufnehmer erfasst wird,
wobei der Betrieb der Umformmaschine (1) durch eine Maschinensteuerung gesteuert wird und
ein Ausgangssignal des zumindest einen Bewegungsaufnehmers zur Erfassung der zumindest einen Kinematikgröße (s(t), v(t), a(t)) der Starrkörperbewegung der Umformmaschine (1) als Eingangssignal einer Maschinensteuerung zur Steuerung der Umformmaschine (1) zugeführt wird,
wobei durch die Maschinensteuerung der Zeitpunkt des Einleitens des Arbeitshubes an eine Momentanphasenlage der zumindest einen Kinematikgröße (s(t),v(t),a(t)) der Starrkörperbewegung angepasst wird zum derartigen Erzeugen von Trägheitskräften und/oder Trägheitsmomenten, sodass der Starrkörperbewegung der Umformmaschine (1) entgegen gewirkt wird und die durch ein Einleiten des Arbeitshubes und/oder die durch eine Unwucht im Antrieb im Betrieb auftretenden Trägheitskräfte und/oder Trägheitsmomente zumindest teilweise kompensiert werden,
**dadurch gekennzeichnet, dass** durch die Maschinensteuerung zum Zeitpunkt des Einleitens des Arbeitshubes eine zwischen dem Antrieb und der Stößeleinrichtung (5) angeordnete Kupplungseinrichtung zum Herstellen einer Wirkverbindung zwischen Antrieb (4a, 4b) und Stößeleinrichtung (5) angesteuert wird.

2. Verfahren nach Anspruch 1, **dadurch gekennzeichnet, dass** der Zeitpunkt des Einkuppelns der Stößeleinrichtung (5) bzw. des Einleitens des Arbeitshubes zeitlich abgestimmt wird auf einen Zeitraum im Bereich eines globalen Maximums der ersten zeitlichen Ableitung des Verlaufs einer Starrkörperauslenkung der Umformmaschine (1).

3. Verfahren nach Anspruch 2, **dadurch gekennzeichnet, dass** das Einleiten des Arbeitshubes durchgeführt wird unmittelbar bevor die erste zeitliche Ableitung des Verlaufs der Starrkörperauslenkung der Umformmaschine das globale Maximum erreicht.

4. Verfahren nach einem der Ansprüche 1 bis 3, **dadurch gekennzeichnet, dass** die zumindest eine Kinematikgröße (s(t), v(t), a(t)) der Starrkörperbewegung des Umformmaschine (1) durch einen Bewegungsaufnehmer, der in einer zwischen dem Abstützfundament und der Umformmaschine angeordneten Lagereinrichtung (8) angeordnet ist.

5. Verfahren nach einem der Ansprüche 1 bis 4, **dadurch gekennzeichnet, dass** die zumindest eine Kinematikgröße (s(t), v(t), a(t)) der Starrkörperbewegung des Umformmaschine (1) durch einen Beschleunigungsaufnehmer erfasst wird, der in einer zwischen dem Abstützfundament und der Umformmaschine angeordneten Lagereinrichtung (8) angeordnet ist.

6. Verfahren nach einem der vorhergehenden Ansprüche, **dadurch gekennzeichnet, dass** die zumindest eine Kinematikgröße (s(t), v(t), a(t)) der Starrkörperbewegung der Umformmaschine (1) relativ zum Abstützfundament (9) auf der Grundlage eines Starrkörper-Simulationsmodells der elastisch gelagerten Umformmaschine (1) berechnet wird und der Zeitpunkt des Einleitens des Arbeitshubes in Abhängigkeit eines berechneten Momentanwertes der zumindest einen Kinematikgröße festgelegt wird.

7. Verfahren nach Anspruch 6, **dadurch gekennzeichnet, dass** zumindest eine Kinematikgröße (s(t), v(t), a(t)) der Starrkörperbewegung der elastisch gelagerten Umformmaschine (1) relativ zum Abstützfundament gemessen und in Abhängigkeit des Messsignals und/oder eines Betriebssignals aus einer Maschinenüberwachungseinrichtung ein Synchronisationssignal abgeleitet wird, mit welchem der zeitliche Verlauf der mittels des Simulationsmodells berechneten Kinematikgröße mit dem realen Betrieb der Umformmaschine (1) synchronisiert wird.

8. Verfahren nach einem der Ansprüche 1 bis 7, **dadurch gekennzeichnet, dass** neben der zumindest einen Kinematikgröße (s(t), v(t), a(t)) der Starrkörperbewegung eine Größe einer elastischen Verformungsbewegung eines vorgegebenen Abschnittes der Umformmaschine relativ zum Gehäuse (3) der Umformmaschine (1) erfasst wird, wobei der Zeitpunkt des Einkuppelns an eine Momentanphasenlage der einen Größe der Verformungsbewegung des vorgegebenen Abschnittes der Umformmaschine (1) angepasst wird zum derartigen Erzeugen von Trägheitskräften und/oder Trägheitsmomenten beim Einkuppeln, dass der elastischen Verformungsbewegung des vorgegebenen Abschnittes der Umformmaschine entgegen gewirkt wird.

9. Verfahren nach einem der Ansprüche 1 bis 8, **dadurch gekennzeichnet, dass** ein aktueller Amplitudenwert einer der zumindest einen Kinematikgröße (s(t), v(t), a(t)) der Starrkörperbewegung der Umformmaschine (1) mit einem vorgegebenen Schwellwert verglichen wird und eine Taktrate der Umformmaschine erhöht wird, wenn der aktuelle Amplitudenwert geringer ist als der vorgegebene Schwellwert.

10. Verfahren nach einem der Ansprüche 1 bis 9, **dadurch gekennzeichnet, dass** der Arbeitshub nur unter der zusätzlichen Bedingung eingeleitet wird, dass für den einzuleitenden Arbeitshub eine durch einen Bediener ausgelöste Signalisierung, insbesondere durch eine Zweihand-Einrückung, vorliegt.

11. Umformeinrichtung (1), insbesondere Presse, umfassend einen Antrieb (4a, 4b) und eine mit dem Antrieb in Wirkverbindung stehende Stößeleinrichtung (5) zur Durchführung eines Arbeitshubes,
wobei durch eine Bewegung der Stößeleinrichtung während des jeweiligen Arbeitshubes, im Zusammenwirken eines an der Stö-βeleinrichtung angeordneten Oberwerkzeuges (6) mit einem an einem Werkzeugtisch angeordneten Unterwerkzeug (7), ein vorgegebener Umformprozess an einem Werkstück durchführbar ist,
wobei die zumindest eine Kinematikgröße (s(t), v(t), a(t)) der Starrkörperbewegung des Umformmaschine (1) durch einen Bewegungsaufnehmer,
wobei ein Ausgangssignal des zumindest einen Bewegungsaufnehmers zur Erfassung der zumindest einen Kinematikgröße (s(t), v(t), a(t)) der Starrkörperbewegung der Umformmaschine (1) als Eingangssignal einer Maschinensteuerung zur Steuerung der Umformmaschine (1) zugeführt wird.
**dadurch gekennzeichnet,**
**dass** der Bewegungsaufnehmer, in einer zwischen dem Abstützfundament und der Umformmaschine angeordneten Lagereinrichtung (8) angeordnet ist,
**dass** die Umformmaschine (1) mittels elastischer Lagerelemente (8) elastisch am Abstützfundament (9) gelagert ist,
**dass** die Maschinensteuerung der der Umformeinrichtung zur Durchführung eines Verfahrens nach einem der Ansprüche 1 bis 10 ausgebildet und eingerichtet ist, und
**dass** eine zwischen dem Antrieb und der Stößeleinrichtung (5) angeordnete Kupplungseinrichtung zum Herstellen einer Wirkverbindung zwischen Antrieb (4a, 4b) und Stößeleinrichtung (5) vorgesehen ist.

## Claims

1. Method for operating an elastically mounted, path-bound or forcecontrolled forming machine (1), in which a working stroke of a ram device (5) operatively connected to a drive is carried out by means of the drive (4a, 4b), and a predefined forming process is carried out on a workpiece by a motion of the ram device during the respective working stroke, in interaction of an upper tool (6) located on the ram device with a lower tool (7) located on a tool table, wherein at least one kinematic variable (s(t), v(t), a(t) of a rigid body motion of the elastically mounted forming machine (1) is detected [Claim 5] relative to the supporting foundation during the operation (T0) thereof (T0) by at least one acceleration sensor and/or by a motion sensor located between a machine housing (3) and the supporting foundation (9),
wherein the operation of the forming machine (1) is controlled by a machine control and
an output signal of the at least one motion sensor for detecting the at least one kinematic variable (s(t), v(t), a(t)) of the rigid body motion of the forming machine (1) is supplied as an input signal to a machine control for controlling the forming machine (1),
wherein the time of the initiation of the working stroke is adapted by the machine control to an instantaneous phase position of the at least one kinematic variable (s(t), v(t), a(t)) of the rigid body motion in order to generate inertial forces and/or moments of inertia so that the rigid body motion of the forming machine (1) is counteracted and so that the inertial forces and/or moments of inertia occurring during operation due to the initiation of the working stroke and/or due to an imbalance in the drive are at least partially compensated,
**characterized in that** a coupling device located between the drive and the ram device (5) is activated by the machine control at the time of the initiation of the working stroke and/or for establishing an operative connection between the drive (4a, 4b) and the ram device (5).

2. Method according to claim 1, **characterized in that** the time of clutch engaging the ram device (5) or of the initiation of the working stroke is timed to a time period in the range of a global maximum of the first time derivation of the course of a rigid body deflection of the forming machine (1).

3. Method according to claim 2, **characterized in that** the initiation of the working stroke is carried out immediately before the first time derivation of the course of the rigid body deflection of the forming machine reaches the global maximum.

4. Method according to claims 1 to 3, **characterized in that** the at least one kinematic variable (s(t), v(t), a(t)) of the rigid body motion of the forming machine (1) is detected by a motion sensor, that is located in a bearing device (8) located between the supporting foundation and the forming machine.

5. Method according to one of the claims 1 to 4, **characterized in that** the at least one kinematic variable (s(t), v(t), a(t)) of the rigid body motion of the forming machine (1) is detected by an acceleration sensor that is located in a bearing device (8) located between the supporting foundation and the forming machine

6. Method according to one of the preceding claims, **characterized in that** the at least one kinematic variable (s(t), v(t), a(t)) of the rigid body motion of the forming machine (1) relative to the supporting foundation (9) is calculated on the base of a rigid body simulation model of the elastically mounted forming machine (1) and the time of the initiation of the working stroke is defined depending on a calculated instantaneous value of the at least one kinematic variable.

7. Method according to claim 6, **characterized in that** at least one kinematic variable (s(t), v(t), a(t)) of the rigid body motion of the elastically mounted forming machine (1) relative to the supporting foundation is measured and a synchronization signal is derived depending on the measurement signal and/or of an operation signal from a machine monitoring device, synchronization signal with which the time sequence of the kinematic variable calculated by means of the simulation model is synchronized with the real rigid body motion of the forming machine (1).

8. Method according to one of the claims 1 to 7, **characterized in that** one variable of an elastic deformation movement of a predefined section of the forming machine relative to the housing (3) of the forming machine (1) is detected besides the at least one kinematic variable (s(t), v(t), a(t)) of the rigid body motion, wherein the time of the clutch engaging is adapted to an instantaneous phase position of the one variable of the deformation movement of the predefined section of the forming machine (1) for generating inertial forces and/or moments of inertia during the clutch engaging so that the elastic deformation movement of the predefined section of the forming machine is counteracted.

9. Method according to one of the claims 1 to 8, **characterized in that** a present amplitude value of an at least one kinematic variable (s(t), v(t), a(t)) of the rigid body motion of the forming machine (1) is compared to a predefined threshold and a cycle rate of the forming machine is increased when the present amplitude value is lower than the predefined threshold.

10. Method according to one of the claims 1 to 9, **characterized in that** the working stroke is initiated only under the additional condition of the event of a signaling triggered by an operator, in particular by a two-hand activation, for the working stroke to be initiated.

11. Forming device (1), in particular a press, comprising a drive (4a, 4b) and a ram device (5) operatively connected to the drive for carrying out a working stroke, wherein a predefined forming process can be carried out on a workpiece by a motion of the ram device during the respective working stroke,
in interaction of an upper tool (6) located on the ram device with a lower tool (7) located on a tool table,
wherein the at least one kinematic variable (s(t), v(t), a(t)) of the rigid body motion is detected by a motion sensor,
wherein an output signal of the at least one motion sensor is supplied to a machine control for controlling the forming machine (1) for determining the at least one kinematic variable (s(t), v(t), a(t)) of the rigid body motion of the forming machine (1) as an input signal, **characterized in that** the motion sensor that is located in a bearing device (8) located between the supporting foundation and the forming device, that the forming machine (1) is elastically supported on the supporting foundation (9) by means of elastic bearing elements (8), that the machine control of the forming device is designed and configured for carrying out a method according to one of the claims 1 to 10 and that a coupling device located between the drive and the ram device (5) is provided for establishing an operative connection between the drive (4a, 4b) and the ram device (5).

## Revendications

1. Procédé pour faire fonctionner une machine de formage (1) montée élastiquement, avec un fonctionnement relatif à la trajectoire ou à la force,
pour lequel une force de travail d'un dispositif à piston qui est en liaison opérationnelle avec un entraînement est exécutée au moyen d'un entraînement (41, 4b),
et un processus de formage prédéfini est exécuté sur une pièce à usiner par un déplacement du dispositif à piston pendant la course de travail respective, en interaction d'un outil supérieur (6) placé sur le dispositif à piston avec un outil inférieur (7) placé sur une table d'outils,
cependant qu'au moins une valeur cinématique (s(t), v(t), a(t) d'un déplacement d'un corps rigide de la machine de formage (1) montée élastiquement par rapport à la fondation d'appui est détectée lors de son fonctionnement (T0) par au moins un capteur d'accélération et/ou par un capteur de déplacement placé entre le carter de machine (3) et la fondation d'appui (9),
cependant que le fonctionnement de la machine de formage (1) est commandé par une commande de machine et
un signal de sortie du au moins un capteur d'accélération pour déterminer la au moins une valeur cinématique (s(t), v(t), a(t) du déplacement d'un corps rigide de la machine de formage (1) est amené en tant que signal d'entrée à une commande de machine pour la commande de la machine de formage (1),
cependant que le moment de démarrage de la course de travail est adaptée à une position de phase momentanée de la au moins une valeur cinématique (s(t), v(t), a(t) du déplacement d'un corps rigide pour générer des forces d'inertie et/ou des moments d'inertie si bien que le déplacement du corps rigide de la machine de formage (1) est contrecarré et les forces d'inertie et/ou moments d'inertie qui se produisent par un démarrage de la course de travail et/ou par un déséquilibrage dans l'entraînement en fonctionnement sont au moins partiellement compensées,
**caractérisé en ce qu'**un dispositif de couplage, placé entre l'entraînement et le dispositif à piston (5) est excité par la commande de la machine au moment du démarrage de la course de travail pour réaliser une liaison opérationnelle entre l'entraînement (41, 4b) et le dispositif à piston (5).

2. Procédé selon la revendication 1, **caractérisé en ce que** le moment de l'accouplement du dispositif à piston (5) ou du démarrage de la course de travail est adapté temporellement à une période dans la plage d'un maximum global de la première dérivée temporelle du déroulement d'une déflexion du corps rigide de la machine de formage (1).

3. Procédé selon la revendication 2, **caractérisé en ce que** le démarrage de la course de travail est exécuté immédiatement avant que la première dérivée temporelle du déroulement d'une déflexion du corps rigide de la machine de formage atteigne le maximum global.

4. Procédé selon l'une des revendications 1 à 3, **caractérisé en ce que** la au moins une valeur cinématique (s(t), v(t), a(t) du déplacement d'un corps rigide de la machine de formage (1) est détectée par un capteur de déplacement qui est placé entre la fondation d'appui et la machine de formage.

5. Procédé selon l'une des revendications 1 à 4, **caractérisé en ce que** la au moins une valeur cinématique (s(t), v(t), a(t) du déplacement d'un corps rigide de la machine de formage (1) est détectée par un accélérateur de déplacement qui est placé dans un dispositif de palier (8) placé entre la fondation d'appui et la machine de formage.

6. Procédé selon l'une des revendications précédentes, **caractérisé en ce que** la au moins une valeur cinématique (s(t), v(t), a(t) du déplacement d'un corps rigide de la machine de formage (1) est calculée par rapport à la fondation d'appui (9) sur la base d'un modèle de simulation du corps rigide de la machine de formage (1) montée élastiquement et le moment du démarrage de la course de travail est fixé en fonction d'une valeur momentanée calculée de la au moins une valeur cinématique.

7. Procédé selon la revendication 6, la au moins une valeur cinématique (s(t), v(t), a(t) du déplacement d'un corps rigide de la machine de formage (1) est mesurée par rapport à la fondation d'appui et un signal de synchronisation est dérivé en fonction du signal de mesure et/ou d'un signal de fonctionnement provenant d'un dispositif de monitorage de la machine, signal de synchronisation avec lequel le déroulement dans le temps de la valeur cinématique calculée à l'aide du modèle de simulation est synchronisée avec le fonctionnement réel de la machine de formage (1).

8. Procédé selon l'une des revendications 1 à 7, **caractérisé en ce qu'**en plus de la au moins une valeur cinématique (s(t), v(t), a(t) du déplacement du corps rigide une valeur du déplacement de déformation élastique d'une section prédéfinie de la machine de formage par rapport au carter (3) de la machine de formage (1) est détectée, cependant que le moment de la mise en prise est adapté à une position de phase momentanée de la valeur du déplacement de déformation élastique de la section prédéfinie de la machine de formage (1) pour générer des forces d'inertie et/ou des moments d'inertie tels lors de la mise en prise que le déplacement de déformation élastique de la section prédéfinie de la machine de formage est contrecarré.

9. Procédé selon l'une des revendications 1 à 8, **caractérisé en ce qu'**une valeur d'amplitude actuelle de la au moins une valeur cinématique (s(t), v(t), a(t) du déplacement d'un corps rigide de la machine de formage (1) est comparée à une valeur de seuil prédéfinie et une cadence de la machine de formage est augmentée lorsque la valeur d'amplitude actuelle est inférieure à la valeur de seuil prédéfinie.

10. Procédé selon l'une des revendications 1 à 9, **caractérisé en ce que** la course de travail n'est démarrée qu'à la condition supplémentaire qu'il existe, pour la course de travail à démarrer, une signalisation déclenchée par l'opérateur, en particulier par un enclenchement à deux mains.

11. Machine de formage (1), en particulier presse, comprenant un entraînement (4a, 4b) et un dispositif à piston (5) en relation opérationnelle avec l'entraînement pour exécuter une course de travail,
cependant qu'un processus de formage prédéfini peut être exécuté sur une pièce à usiner par un déplacement du dispositif à piston pendant la course de travail respective, en interaction d'un outil supérieur (6) placé sur le dispositif à piston avec un outil inférieur (7) placé sur une table d'outils,
cependant que la au moins une valeur cinématique (s(t), v(t), a(t) du déplacement d'un corps rigide de la machine de formage (1) est détectée par un capteur de déplacement,
cependant qu'un signal de sortie du au moins un capteur de déplacement pour détecter la au moins une valeur cinématique (s(t), v(t), a(t) du déplacement d'un corps rigide de la machine de formage (1) est amené en tant que signal d'entrée à une commande de machine pour la commande de la machine de formage (1),
**caractérisé en ce**
**que** le capteur de déplacement est placé dans un dispositif de palier (8) placé entre la fondation d'appui et la machine de formage,
**que** la machine de formage (1) est montée élastiquement sur la fondation d'appui (9) au moyen d'éléments de palier élastique,
**que** la commande de la machine du dispositif de formage est configurée et agencée pour exécuter un procédé selon l'une des revendications 1 à 10 et
**qu'**un dispositif de couplage placé entre l'entraînement et le dispositif à piston (5) est prévu pour établir une liaison opérationnelle entre l'entraînement (4a, 4b) et le dispositif à piston (5).
